# EUROPÄISCHE PATENTSCHRIFT

(11) **EP 2 606 247 B1**
(45) Veröffentlichungstag und Bekanntmachung des Hinweises auf die Patenterteilung: **14.05.2014**
(21) Anmeldenummer: 11734109.9
(22) Anmeldetag: 21.07.2011
(51) Int. Cl.: F16C 33/46, F16C 33/58, F16C 19/34

(54) **KEGELROLLENLAGER MIT KÄFIG**
TAPERED ROLLER BEARING HAVING A CAGE
ROULEMENT À ROULEAUX CONIQUES MUNI D'UNE CAGE

(30) Priorität: 21.08.2010 DE 102010035062
(43) Veröffentlichungstag der Anmeldung: 26.06.2013
(73) Patentinhaber: Schaeffler Technologies GmbH & Co. KG, 91074 Herzogenaurach (DE)
(72) Erfinder: SCHLEGEL, Thorsten, 97723 Frankenbrunn (DE)
(86) Internationale Anmeldenummer: PCT/EP2011/062495
(87) Internationale Veröffentlichungsnummer: WO 2012/031815

(56) Entgegenhaltungen:
- CA-A1- 940 181
- DE-A1- 4 338 350
- DE-A1-102004 030 964

## Beschreibung

### Gebiet der Erfindung

Die Erfindung betrifft ein Kegelrollenlager, mit zwei koaxialen Lagerringen sowie einer Vielzahl von zwischen den Lagerringen angeordneten, in einem Käfig geführten Kegelrollen, die auf zugehörigen Laufbahnen an den Lagerringen abrollen, und mit einem Bord am großen Durchmesser des inneren Lagerrings zur Ausleitung von Axialkräften aus den Kegelrollen, wobei der Käfig an seinem großen Durchmesser elastische Vorsprünge aufweist, die mit dem Bord zusammenwirken und den Käfig mit den Kegelrollen axial gegen den Bord vorspannen.

### Hintergrund der Erfindung

In der DE 43 38 350 A1 ist in derartiges Kegelrollenlager mit Käfig beschrieben, wobei der Käfig in den Taschen am kleinen Durchmesser mit axialen, die Rollen gegen den großen Bord vorspannenden, elastischen Mitteln versehen ist und am großen Durchmesser Vorsprünge aufweist, welche in eine am inneren Lagerring angeordnete Nut oder hinter einen am Lagerring angeordneten Vorsprung einschnappen. Der Innenring besitzt lediglich am großen Durchmesser einen Bord und die elastischen Mittel sind in Form von Axialwellen oder Segmentlippen ausgebildet. Dieses Kegelrollenlager mit Käfig soll bei einfacher Montagemöglichkeit kostengünstig ohne Toleranz-, Reibungs- und Platzprobleme zu fertigen sein sowie ein sicheres Anstellen ermöglichen, so dass sich die Rollen bereits nach dem Zusammenbau des gesamten Lagers und dessen Einbau in eine Maschine sofort in der richtigen Position befinden.

Dieses bekannte Kegelrollenlager hat sich bewährt. Um eine spielfreie Anlage der Kegelrollen am Führungsbord realisieren zu können, ist es jedoch notwendig, die Toleranzeinflüsse, z.B. von der Wälzkörperlängentoleranz, der Käfigtaschenbreitentoleranz, der Lagerbauhöhentoleranz und von der Breitentoleranz einer Freidrehung zum Einschnappen der radialen Käfigvorsprünge in Form von Haltekrallen, durch eine entsprechende axiale Vorspannung der Haltekrallen auszugleichen. Hierdurch entsteht jedoch eine permanente, axiale Verspannung der Wälzkörper gegen den Führungsbord, wodurch zusätzliche Zwangskräfte aufgebracht werden. Diese wirken sich negativ auf das Laufverhalten des Kegelrollenlagers im Betrieb aus, da eine erhöhte Reibung im Lager entsteht, die erst nach Verschleiß der Haltekrallen oder durch Verschleiß der Axialwellen oder Segmentlippen am kleinen Käfigdurchmesser verringert oder aufgehoben werden.

Das bekannte Kegelrollenlager ist außerdem verhältnismäßig aufwendig in der Fertigung, da die Käfige als im Spritzgussverfahren hergestellte Kunststoffkäfige ausgebildet sind und Hinterschneidungen aufweisen, für die aufwendige Schieber in der Spritzgießform erforderlich sind. Des Weiteren muss der Borddurchmesser am inneren Lagerring größer als normal ausgebildet sein, um einen Bund mit Anlageflächen für die Krallen zu realisieren. Für jede neue Lagertype wird dementsprechend auch ein eigener Lagerring benötigt.

### Aufgabe der Erfindung

Vor diesem Hintergrund liegt der Erfindung die Aufgabe zugrunde, ein gattungsgemäßes Kegelrollenlager vorzuschlagen, das entsprechend dem Stand der Technik die Funktion der betriebsbereit vorgespannten Kegelrollen für einen optimierten Montagevorgang beibehält, die daraus resultierenden Zwangskräfte jedoch während des Lagerbetriebes nicht aufweist.

### Zusammenfassung der Erfindung

Gelöst wird diese Aufgabe bei einem Kegelrollenlager der eingangs erwähnten Art dadurch, dass am Bord des inneren Lagerringes ein Führungsring aus einem Material mit einem höheren Wärmeausdehnungskoeffizienten als das Material des Bordes mittels Presssitz angeordnet ist, dass der Führungsring von den elastischen Vorsprüngen des Käfigs hintergriffen wird, und dass der Presssitz so bemessen ist, der Führungsring bei einer durch eine Lagererwärmung im Betrieb bewirkten Lockerung des Presssitzes axial verschiebbar wird und die axiale Vorspannung des Käfigs mit den Kegelrollen dadurch aufgehoben wird.

Für die Montage befindet sich der Führungsring am inneren Lagerring in einer Axialstellung, in welcher der Käfig mit den Kegelrollen axial gegen den Bord verspannt ist, wenn die elastischen Vorsprünge den Führungsring hintergreifen. Aufgrund des höheren Wärmeausdehnungskoeffizienten des Materials des Führungsrings gegenüber dem des Materials des Bordes am inneren Lagerring lockert sich bei steigender Lagertemperatur während des Betriebes der Presssitz. Dadurch kann sich der Führungsring axial verschieben, wodurch die axiale Vorspannung auf die Kegelrollen durch den Käfig aufgehoben wird.

Um einen Kontakt des Führungsrings mit dem Käfig zu vermeiden und die vorerwähnten Toleranzeinflüsse zu vermindern, kann der Führungsring auf dem Außenumfang des Bordes angeordnet und bei Lagererwärmung gegen einen Anschlag an Bord begrenzt axial verschiebbar sein. Dies lässt sich entweder dadurch erreichen, dass der Führungsring gegen einen Bund am Bord begrenzt axial verschiebbar ist, oder dadurch, dass im Außenumfang des Bordes eine Nut angeordnet ist, in die ein an der Innenoberfläche des Führungsrings angeordneter, ringförmiger Vorsprung begrenzt axial verschiebbar eingereift.

Vorzugsweise können die Nut und der Vorsprung im Querschnitt trapezförmig ausgebildet sein, und die axiale Erstreckung der Nut kann gegenüber der Erstreckung des Vorsprungs um das zur Aufhebung der Vorspannung erforderliche Axialspiel vergrößert sein.

Für das Material des Führungsrings bestehen verschiedene Möglichkeiten. Er kann beispielsweise aus Metall, insbesondere aus einer Aluminiumlegierung, bestehen, die einen höheren Wärmeausdehnungskoeffizienten als die für den inneren Lagerring verwendeten Stähle aufweist.

Vorzugsweise besteht der Führungsring aus einem technischen Kunststoff, beispielsweise dem gleichen Kunststoff wie der Käfig, da diese Kunststoffe einen deutlich größeren Wärmeausdehnungskoeffizienten als Stahl aufweisen.

### Kurze Beschreibung der Zeichnungen

Die Erfindung wird nachstehend anhand zweier in der Zeichnung dargestellter Ausführungsbeispiele weiter erläutert. In der Zeichnung zeigt
- Fig. 1: eine axiale Schnittansicht einer oberen Hälfte eines erfindungsgemäßen Kegelrollenlagers gemäß einer ersten Ausführungsform,
- Fig. 2: eine vergrößerte Teilschnittansicht der Ausführungsform gemäß Fig. 1, und
- Fig. 3: eine vergrößerte Teilschnittansicht einer zweiten Ausführungsform des erfindungsgemäßen Kegelrollenlagers.

### Ausführliche Beschreibung der Zeichnung

Das erfindungsgemäße Kegelrollenlager 1 besteht aus einem äußeren Lagerring 2 und einem inneren Lagerring 3, zwischen denen in einem Käfig aus Seitenringen 10, 11 und sie verbindenden, schematisch gestrichelt dargestellten Stegen 12 geführte Kegelrollen 4 auf zugehörigen Laufbahnen 7, 8 abrollen.

Die Kegelrollen 4 stützen sich mit ihren Rollenstirnseiten 5 mit großem Durchmesser an einem radialen Bord 9 am inneren Lagerring 3 ab, während die Rollenstirnseiten 6 mit dem kleinen Durchmesser nur am Seitenring 11 anliegen. Die gestrichelt dargestellten Stege 12 liegen radial außerhalb der Kegelrollendrehachse 14, um die Kegelrollen 4 möglichst eng aneinander anordnen und die Anzahl der Kegelrollen 4 erhöhen zu können.

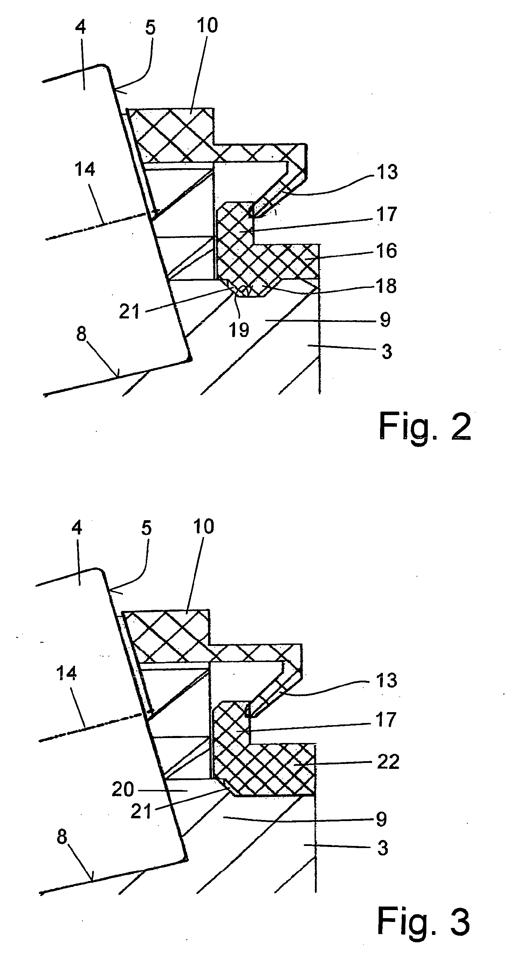

An dem Seitenring 10, der den Rollenstirnseiten 5 mit dem größeren Durchmesser zugewandt ist, sind radial nach innen ragende Vorsprünge 13 in Form von Krallen angeformt, die einen Bund 17 an einem Führungsring 16 axial hintergreifen. Der Führungsring 16 ist an seiner Innenoberfläche mit einem ringförmigen Vorsprung 18 versehen, der in eine Nut 19 am Bord 9 eingreift. Die Querschnitte des ringförmigen Vorsprungs 18 und der Nut 19 sind trapezförmig und zueinander kongruent ausgebildet, jedoch ist die axiale Erstreckung der Nut 19 um das gewünschte Axialspiel 21 größer als die des ringförmigen Vorsprungs 18 (Fig. 2).

Die Abmessungen des Führungsrings 16 sind so bemessen, dass er bei Raumtemperatur mittels Presssitz auf dem Bord 9 sitzt, nachdem er in geeigneter Weise axial auf den Bord 9 geschoben und der ringförmige Vorsprung 18 in die Nut 19 eingeschnappt ist.

Für die Montage der im Käfig 10, 11, 12 vormontierten und gehaltenen Kegelrollen 4 auf dem inneren Lagerring 3 genügt es, die vormontierte Einheit aus den Kegelrollen 4 und dem Käfig 10, 11, 12 auf die Laufbahn 8 des inneren Lagerrings 3 aufzuschieben, bis die als Krallen ausgebildeten Vorsprünge 13 hinter den Bund 17 am Führungsring 16 geschnappt sind.

Wie aus Fig. 2 deutlich ersichtlich ist, liegt die rechte Flanke des ringförmigen Vorsprungs 18 für die Montage an der rechten Flanke der Nut 19 im Bord 9 an, so dass zwischen den jeweils linken Flanken ein Axialspiel 21 vorhanden ist. In dieser Stellung erteilen die als Krallen ausgebildeten Vorsprünge 13 dem Käfig 10, 11, 12 und damit den Kegelrollen 4 eine axiale Vorspannung, welche die Rollenstirnseiten 5 der Kegelrollen 4 zur Anlage an den Bord 9 drängt. In dieser Stellung nehmen die Kegelrollen 4 bereits die richtige Position für die Montage des äußeren Lagerrings 2 und dem Einbau des Kegelrollenlagers 1 in eine Maschine ein.

Das Material des Führungsrings 16 ist so gewählt, dass es einen höheren Wärmeausdehnungskoeffizienten als der Wälzlagerstahl des inneren Lagerrings 3 und des Bordes 9 aufweist. Vorzugsweise besteht der Führungsring 16 aus einem technischen Kunststoff und wird im Spritzgießverfahren hergestellt.

Erwärmt sich nun das Kegelrollenlager 1 im Betrieb, so dehnt sich der Führungsring 16 stärker aus als der innere Lagerring 3 mit dem Bord 9, und der Presssitz zwischen dem Bord 9 und dem Führungsring 16 lockert sich. Dadurch wandert der Führungsring 16 unter dem Einfluss der durch die als Krallen ausgebildeten Vorsprünge 13 aufgebrachten Vorspannung axial nach links, bis das Axialspiel 21 aufgehoben ist. In dieser Stellung ist auch die auf die Kegelrollen 4 über die als Krallen ausgebildeten Vorsprünge 13 und den Käfig 10, 11, 12 aufgebrachte Vorspannung weitgehend oder vollständig aufgehoben, so dass hierdurch keine nachteiligen Reibungseinflüsse mehr entstehen können.

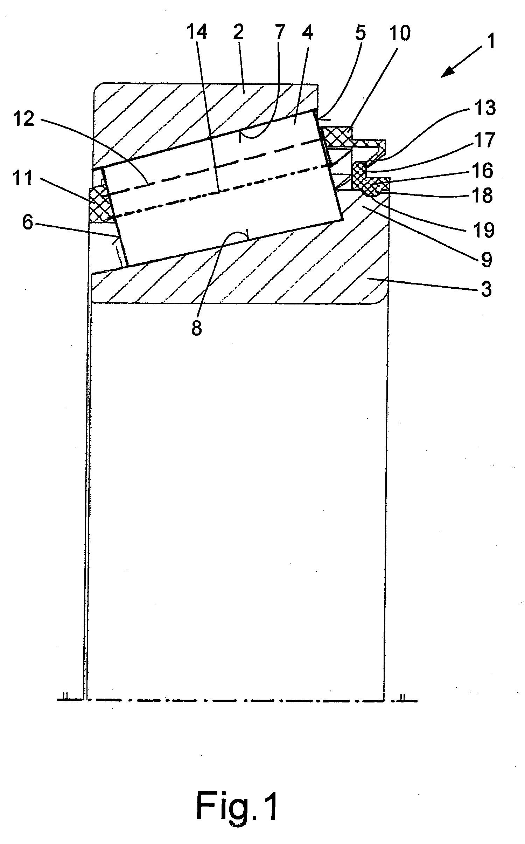

Die Ausführungsform gemäß Fig. 3 unterscheidet sich von der gemäß den Figuren 1 und 2 nur dadurch, dass der Führungsring 22 eine glatte Innenoberfläche aufweist, die mittels Presssitz radial auf dem Bord 9 aufsitzt. Der Bord 9 weist einen radialen Bund 20 auf, an dem sich der Führungsring 22 anlegt, nachdem das Axialspiel 21 bei Erwärmung des Kegelrollenlagers 1 und entsprechender axialer Verschiebung des Führungsrings 22 verbraucht ist.

Da die Vorspannung der Kegelrollen 4 gegen den Bord 9 durch die Führungsringe 16 bzw. 22 bewirkt wird, lassen sich vorhandene innere Standardlagerringe verwenden, welche nur durch eine einfache Bearbeitung des Bordes 9 gemäß Fig. 2 oder Fig. 3 modifiziert werden müssen. Auch die Käfiggestaltung ist vereinfacht, da die Vorsprünge 13 für unterschiedliche Abmessungen der Kegelrollenlager dimensionsbezogen unverändert bleiben können, wenn der Bund 17 am Führungsring 16 bzw. 22 in seiner radialen Ausdehnung entsprechend angepasst wird, was sich bei einem im Spritzgießverfahren hergestellten Führungsring 16 bzw. 22 durch einfache Einlegeteile in die Spritzgießform erreichen lässt.

Für die Kegelrollen 4 ergeben sich optimierte Ablaufbedingungen, da sie von Zwangskräften schnell befreit sind und sich keine Verschließpartikel in der Lagerumgebung bilden können.

### Bezugszeichenliste

- 1: Kegelrollenlager
- 2: Äußerer Lagerring
- 3: Innerer Lagerring
- 4: Kegelrollen
- 5: Rollenstirnseite
- 6: Rollenstirnseite
- 7: Laufbahn
- 8: Laufbahn
- 9: Bord
- 10: Seitenring
- 11: Seitenring
- 12: Stege
- 13: Vorsprünge
- 14: Kegelrollenachse
- 16: Führungsring
- 17: Bund am Führungsring
- 18: Ringförmiger Vorsprung
- 19: Nut
- 20: Bund am Bord
- 21: Axialspiel
- 22: Führungsring

## Patentansprüche

1. Kegelrollenlager (1), mit zwei koaxialen Lagerringen (2, 3) sowie einer Vielzahl von zwischen den Lagerringen (2, 3) angeordneten, in einem Käfig (10, 11, 12) geführten Kegelrollen (4), die auf zugehörigen Laufbahnen (7, 8) an den Lagerringen (2, 3) abrollen, und mit einem Bord (9) am großen Durchmesser des inneren Lagerrings (3) zur Ausleitung von Axialkräften aus den Kegelrollen (4), wobei der Käfig (10, 11, 12) an seinem großen Durchmesser elastische Vorsprünge (13) aufweist, die mit dem Bord (9) zusammenwirken und den Käfig (10, 11, 12) mit den Kegelrollen (4) axial gegen den Bord (9) vorspannen, **dadurch gekennzeichnet, dass** am Bord (9) ein Führungsring (16, 22) aus einem Material mit einem höheren Wärmeausdehnungskoeffizienten als das Material des Bordes (9) mittels Presssitz angeordnet ist, dass der Führungsring (16, 22) von den elastischen Vorsprüngen (13) des Käfigs (10, 11, 12) hintergriffen wird, und dass der Presssitz so bemessen ist, der Führungsring (16, 22) bei einer durch eine Lagererwärmung im Betrieb bewirkten Lockerung des Presssitzes axial verschiebbar wird und die axiale Vorspannung des Käfigs (10, 11, 12) mit den Kegelrollen (4) dadurch aufgehoben wird.

2. Kegelrollenlager nach Anspruch 1, **dadurch gekennzeichnet, dass** der Führungsring (16, 22) auf dem Außenumfang des Bordes (9) des inneren Lagerringes (3) angeordnet und bei Lagererwärmung gegen einen Anschlag (19, 20) am Bord (9) begrenzt axial verschiebbar ist.

3. Kegelrollenlager nach Anspruch 2, **dadurch gekennzeichnet, dass** der Führungsring (22) entlang eines Axialspiels (21) gegen einen Bund (20) am Bord (9) begrenzt axial verschiebbar ist.

4. Kegelrollenlager nach Anspruch 2, **dadurch gekennzeichnet, dass** im Außenumfang des Bordes (9) eine Nut (19) angeordnet ist, in die ein an der Innenoberfläche des Führungsringes (16) angeordneter, ringförmiger Vorsprung (18) begrenzt axial verschiebbar eingreift.

5. Kegelrollenlager nach Anspruch 4, **dadurch gekennzeichnet, dass** die Nut (19) und der Vorsprung (18) im Querschnitt trapezförmig ausgebildet sind, und dass die axiale Erstreckung der Nut (19) gegenüber der axialen Erstreckung des Vorsprungs (18) um ein Axialspiel (21) vergrößert ist.

6. Kegelrollenlager nach einem der Ansprüche 1 bis 5, **dadurch gekennzeichnet, dass** der Führungsring (16, 22) aus einem technischen Kunststoff mit einem höheren Wärmeausdehnungskoeffizienten als Wälzlagerstahl besteht.

## Claims

1. Tapered roller bearing (1), having two coaxial bearing rings (2, 3) and a multiplicity of tapered rollers (4) which are arranged between the bearing rings (2, 3), are guided in a cage (10, 11, 12) and roll on associated raceways (7, 8) on the bearing rings (2, 3), and having a rim (9) on the large diameter of the inner bearing ring (3) for diverting axial forces out of the tapered rollers (4), the cage (10, 11, 12) having elastic projections (13) on its large diameter, which elastic projections (13) interact with the rim (9) and prestress the cage (10, 11, 12) with the tapered rollers (4) axially against the rim (9), **characterized in that** a guide ring (16, 22) made from a material with a higher coefficient of thermal expansion than the material of the rim (9) is arranged on the rim (9) by means of a press fit, **in that** the guide ring (16, 22) is engaged behind by the elastic projections (13) of the cage (10, 11, 12), and **in that** the press fit is dimensioned in such a way that, in the case of loosening of the press fit brought about during operation as a result of bearing heating, the guide ring (16, 22) becomes axially displaceable and the axial prestress of the cage (10, 11, 12) with the tapered rollers (4) is cancelled as a result.

2. Tapered roller bearing according to Claim 1, **characterized in that** the guide ring (16, 22) is arranged on the outer circumference of the rim (9) of the inner bearing ring (3) and, in the case of bearing heating, is axially displaceable to a limited extent against a stop (19, 20) on the rim (9).

3. Tapered roller bearing according to Claim 2, **characterized in that**, along an axial play (21), the guide ring (22) is axially displaceable to a limited extent against a collar (20) on the rim (9).

4. Tapered roller bearing according to Claim 2, **characterized in that** a groove (19) is arranged in the outer circumference of the rim (9), into which groove (19) an annular projection (18) which is arranged on the inner surface of the guide ring (16) engages in an axially displaceable manner to a limited extent.

5. Tapered roller bearing according to Claim 4, **characterized in that** the groove (19) and the projection (18) are of trapezoidal configuration in cross section, and **in that** the axial extent of the groove (19) is enlarged by an axial play (21) in comparison with the axial extent of the projection (18).

6. Tapered roller bearing according to one of Claims 1 to 5, **characterized in that** the guide ring (16, 22) is composed of a technical plastic with a higher coefficient of thermal expansion than roller bearing steel.

## Revendications

1. Roulement à rouleaux coniques (1), comprenant deux bagues de roulement coaxiales (2, 3) ainsi qu'une pluralité de rouleaux coniques (4) disposés entre les bagues de roulement (2, 3), guidés dans une cage (10, 11, 12), qui roulent sur des chemins de roulement associés (7, 8) sur les bagues de roulement (2, 3), et comprenant un bord (9) sur le grand diamètre de la bague de roulement interne (3) pour dévier des forces axiales depuis les rouleaux coniques (4), la cage (10, 11, 12) présentant des saillies élastiques (13) au niveau de son grand diamètre, lesquelles coopèrent avec le bord (9) et sollicitent avec précontrainte la cage (10, 11, 12) avec les rouleaux coniques (4) axialement contre le bord (9), **caractérisé en ce que** sur le bord (9) est disposée, au moyen d'un ajustement serré, une bague de guidage (16, 22) en un matériau de coefficient de dilatation thermique plus élevé que celui du matériau du bord (9), **en ce que** la bague de guidage (16, 22) est engagée par l'arrière par les saillies élastiques (13) de la cage (10, 11, 12), et **en ce que** l'ajustement serré est dimensionné de telle sorte que la bague de guidage (16, 22) puisse être déplacée axialement dans le cas d'un relâchement de l'ajustement serré provoqué par un échauffement du roulement pendant le fonctionnement et que la précontrainte axiale de la cage (10, 11, 12) avec les rouleaux coniques (4) soit de ce fait supprimée.

2. Roulement à rouleaux coniques selon la revendication 1, **caractérisé en ce que** la bague de guidage (16, 22) est disposée sur la périphérie extérieure du bord (9) de la bague de roulement interne (3) et peut être déplacée axialement de manière limitée lors d'un échauffement du roulement contre une butée (19, 20) sur le bord (9).

3. Roulement à rouleaux coniques selon la revendication 2, **caractérisé en ce que** la bague de guidage (22) peut être déplacée axialement de manière limitée le long d'un jeu axial (21) contre un épaulement (20) sur le bord (9).

4. Roulement à rouleaux coniques selon la revendication 2, **caractérisé en ce que** dans la périphérie extérieure du bord (9) est disposée une rainure (19) dans laquelle s'engage, de manière déplaçable axialement de manière limitée, une saillie annulaire (18) disposée sur la surface interne de la bague de guidage (16).

5. Roulement à rouleaux coniques selon la revendication 4, **caractérisé en ce que** la rainure (19) et la saillie (18) sont réalisées sous forme trapézoïdale en section transversale, et **en ce que** l'étendue axiale de la rainure (19) est augmentée d'un jeu axial (21) par rapport à l'étendue axiale de la saillie (18).

6. Roulement à rouleaux coniques selon l'une quelconque des revendications 1 à 5, **caractérisé en ce que** la bague de guidage (16, 22) se compose d'un plastique technique comprenant un coefficient de dilatation thermique plus élevé que l'acier à roulement.
